# EUROPÄISCHE PATENTANMELDUNG

(11) **EP 2 810 614 A1**
(43) Veröffentlichungstag der Anmeldung: **10.12.2014**
(21) Anmeldenummer: 13170274.8
(22) Anmeldetag: 03.06.2013
(51) Int. Cl.: A61C 1/00, F16C 33/60

(54) **Lager zum drehbaren Lagern eines Drehteils und zahnärztliches Handstück mit entsprechendem Lager**

(71) Anmelder: Kaltenbach & Voigt GmbH, 88400 Biberach (DE)
(72) Erfinder: Kuhn, Bernhard, 88400 Biberach (DE); Moll, Julia, 89584 Ehingen/Briel (DE); Rösch, Thomas, 88447 Warthausen (DE); Butscher, Jürgen, 88299 Leutkirch (DE)
(74) Vertreter: Thun, Clemens

(57) **Zusammenfassung**

Ein Lager (1) zum drehbaren Lagern eines Drehteils, beispielsweise eines Turbinenläufers eines zahnärztlichen Handstücks, weist mehrere Wälzkörper (5), insbesondere Kugeln, die zwischen einem inneren Lagerring (10) und einem äußeren Lagerring (20) angeordnet sind, einen die Wälzkörper (5) in Axialrichtung umgebenden Käfig (6) sowie ein Verriegelungselement zur axialen Verriegelung der Lagerringe (10, 20) gegeneinander auf, wobei das Verriegelungselemente ein ringartiges oder ringsegmentartiges Sicherungselement (30) aufweist, welches am Innenumfang des äußeren Lagerrings (20) oder am Außenumfang des inneren Lagerings (10) im Bereich des Käfigs (6) angebracht ist, derart, dass es die Wälzkörper (5) in Axialrichtung blockiert.

## Beschreibung

Die vorliegende Erfindung betrifft ein Lager zum drehbaren Lagern eines Drehteils gemäß dem Oberbegriff des Anspruchs 1, wobei es sich bei dem Drehteil bspw. um einen Turbinenläufer eines zahnärztlichen Handstücks handeln kann. Ferner betrifft die vorliegende Erfindung ein zahnärztliches Handstück mit einem derartigen Lager.

Zahnärztliche Behandlungen werden überwiegend mit Werkzeugen durchgeführt, welche die Zahnsubstanz abhebend bearbeiten. Das klassische Behandlungswerkzeug ist ein zahnärztlicher Bohrer, der üblicherweise im Kopfbereich eines zahnärztlichen Handstücks drehbar gelagert ist und mit dessen Hilfe Zahnsubstanz abgetragen wird. Der Bohrer ist hierbei in einer Werkzeugaufnahme angeordnet, welche sich im Kopfbereich des Handstücks befindet und mittels eines Antriebs in Rotation versetzt wird. Hierfür können sowohl Elektroantriebe als auch Turbinen zum Einsatz kommen.

Aus dem Stand der Technik sind unterschiedlichste Ausführungsformen von Lagern bekannt, mit deren Hilfe bspw. die Turbinenläufer von zahnärztlichen Turbinenhandstücken drehbar gelagert werden können. Ein bevorzugtes Lager ist unter der Bezeichnung "Angular-Kontaktlager" bekannt. Es zeichnet sich dadurch aus, dass einer der beiden Lagerringe, welche die Laufflächen für die Wälzkörper des Lagers, also bspw. für die Kugeln bilden, eine einseitig abgeschliffene Schulter aufweist. Diese Konfiguration ermöglicht es, sog. Massivkäfige in dem Lager zu verbauen, mit deren Hilfe die Kugeln in einer bestimmten Weise zueinander positioniert werden. Derartige Massivkäfige führen zu gravierenden stabilitätstechnischen Vorteilen des Lagers.

Auf der anderen Seite allerdings führt die einseitig abgeschliffene Schulter eines der Lagerringe dazu, dass das Lager in Axialrichtung nur einseitig belastbar ist. Dieser Nachteil ist bei einem montierten Lager für den Fall, dass dieses auch richtig verbaut wurde, im Prinzip bedeutungslos, da während des Betriebs ein Lager in der Regel nur für Kräfte aufkommen muss, die seiner Hauptbelastungsrichtung entsprechen. Üblicherweise kann also davon ausgegangen werden, dass während des Betriebs keine wesentlichen Kräfte in Axialrichtung vorliegen. Beim Handling des Lagers allerdings, insbesondere bei dessen Montage oder Demontage kommt es sehr häufig vor, dass ein Lager bzw. einer der Lagerringe in Axialrichtung und insbesondere auch in der falschen Richtung belastet werden muss und das Lager dann in seine Einzelteile zerfällt. Ist dies der Fall, so ist meist die gesamte Baueinheit bestehend aus Lager und drehbar gelagertem Element - also bspw. der gesamte Turbinenläufer - unbrauchbar und muss durch eine neue Einheit vollständig ersetzt werden.

Um einen derartigen Zerfall solcher einseitig belastbarer Lager zu verhindern, ist aus dem Stand der Technik bekannt, am Innenring des Lagers sog. Schleuderscheiben anzuschweißen, die einem Auseinanderfallen des Lagers einen gewissen Widerstand entgegensetzen. Dieses Anschweißen der Schleuderscheibe stellt allerdings eine verhältnismäßig unsichere Verbindung dar, die auch nur mittels Zerstörung sicher geprüft werden kann. Ein weiterer Nachteil besteht darin, dass ein fehlerhaftes Positionieren dieser Schleuderscheibe zu einer Unwucht führen kann, die bei den extrem hohen Drehzahlen einer zahnärztlichen Turbine einen stark negativen Einfluss auf das Laufverhalten ausüben kann.

Der vorliegenden Erfindung liegt deshalb die Aufgabenstellung zugrunde, eine neuartige Lösung zum Realisieren eines Lagers anzugeben, welche es gestattet, einen Massivkäfig einzusetzen und trotz allem eine axiale Verriegelung der Lagerringe gegeneinander zu erzielen.

Die Aufgabe wird durch ein Lager zum drehbaren Lagern eines Drehteils mit den Merkmalen des Anspruchs 1 gelöst. Vorteilhafte Weiterbildungen der Erfindung sind Gegenstand der abhängigen Ansprüche.

Die erfindungsgemäße Lösung beruht auf dem Gedanken, als Verriegelungselement zur Sicherung der beiden Lagerringe gegeneinander ein ringartiges Sicherungselement einzusetzen, welches an einem der beiden Lagerringe im Bereich des Käfigs lösbar angebracht ist, derart, dass es die Wälzkörper in Axialrichtung blockiert.

Erfindungsgemäß wird deshalb ein Lager zum drehbaren Lagern eines Drehteils, bspw. eines Turbinenläufers eines zahnärztlichen Handstücks vorgeschlagen, wobei das Lager mehrere Wälzkörper, insbesondere Kugeln, die zwischen einem inneren Lagerring und einem äußeren Lagerring angeordnet sind, einen die Wälzkörper in Axialrichtung umgebenden Käfig sowie ein Verriegelungselement zur axialen Verriegelung der Lagerringe gegeneinander aufweist, und wobei erfindungsgemäß das Verriegelungselement ein ringartiges oder ringsegmentartiges Sicherungselement aufweist, welches am Innenumfang des äußeren Lagerrings oder am Außenumfang des inneren Lagerrings im Bereich des Käfigs - vorzugsweise form- und/oder kraftschlüssig - angebracht ist, derart, dass es die Wälzkörper bei falscher Belastung in Axialrichtung blockiert und am Zerfallen hindert.

Insbesondere kann das Sicherungselement durch ein elastisches Element - beispielsweise aus Kunststoff - mit einem vorzugsweise über seinen gesamten Umfang im Wesentlichen gleichmäßigen Querschnitt gebildet sein, der mit dem entsprechenden Lagerring lösbar verbunden, insbesondere verrastet ist. Nach Montage des Lagers muss dieses Sicherungselement also einfach in den entsprechenden Lagerring eingeschnappt werden und sorgt dann für die angestrebte axiale Verriegelung der Lagerringe gegeneinander in einer Richtung.

Zur axialen Verriegelung in der anderen Richtung ist vorzugsweise ein weiteres, zweites Sicherungselement vorgesehen, welches einstückig mit einem der Lagerringe verbunden ist. Bei diesem zweiten Sicherungselement kann es sich insbesondere um einen von dem entsprechenden Lagerring in Richtung des anderen Lagerrings erstreckenden Endbereich handeln, wobei beide Sicherungselemente in Kombination dann eine vollständige Verriegelung der Lagerringe gegeneinander in Axialrichtung gewährleisten. Vorzugsweise sind beide Sicherungselemente jeweils am Außenlagerring angeordnet, da sie sich in diesem Fall dann nicht mit dem Drehteil mitdrehen müssen und insbesondere nicht zu einer evtl. Unwucht führen können, die das Laufverhalten der gesamten Anordnung negativ beeinträchtigen könnte.

Vorzugsweise ist das erfindungsgemäße Lager wiederum in Form des oben bereits erwähnten Angular-Kontaktlagers ausgestaltet. D.h., die Lagerringe weisen jeweils eine Vertiefung auf, welche eine Lauffläche für die Wälzkörper bildet, wobei bei zumindest einem der beiden Lagerringe eine neben der Vertiefung befindliche Schulterfläche abgeflacht bzw. abgeschliffen ist. Diese Ausführungsform ermöglicht eine einfache Montage des Lagers und insbesondere die Verwendung der bereits erwähnten vorteilhaften Massivkäfige. Das erste Sicherungselement ist dabei insbesondere im Bereich der abgeflachten bzw. abgeschliffenen Schulter des entsprechenden Lagerrings angeordnet.

Ein Vorteil der erfindungsgemäßen Anordnung des Sicherungselements im Bereich des Käfigs besteht ferner auch darin, dass dieses zusätzliche Sicherungselement nicht zu einer Verlängerung der gesamten Lageranordnung in Axialrichtung führt. Stattdessen kann ein äußerst kompaktes Lager geschaffen werden, welches durch den Einsatz entsprechender Massivkäfige äußerst gute Laufeigenschaften aufweist, trotz allem allerdings eine ausreichende Sicherung in Axialrichtung bietet, sodass bei einer Montage oder einer Demontage des Lagers ein Auseinanderfallen nicht zu befürchten ist. Eine derartige Lageranordnung ist in zahlreichen Einsatzgebieten verwendbar und nicht nur auf das Gebiet zahnärztlicher oder zahnmedizinischer Handstücke beschränkt.

Nachfolgend soll die Erfindung anhand der beiliegenden Zeichnung näher erläutert werden. Es zeigen:
- Figur 1: ein zahnärztliches Turbinenhandstück, bei dem erfindungsgemäße Lager zum Einsatz kommen;
- Figur 2: eine Schnittdarstellung eines erfindungsgemäß ausgestalteten Lagers;
- Figur 3: die Stirnansicht des Lagers von Figur 2 und
- Figur 4: eine vergrößerte Ansicht des Endbereichs des Lagers, in dem das lösbar angebrachte Sicherungselement angeordnet ist.

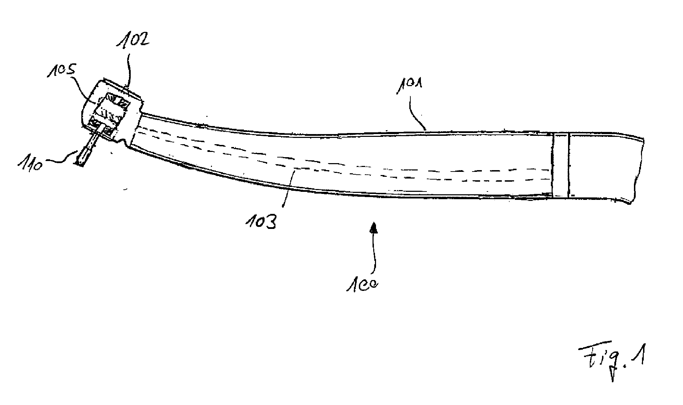

Figur 1 zeigt als denkbares Anwendungsbeispiel für die vorliegende Erfindung ein zahnärztliches Turbinenhandstück 100, welches eine längliche Griffhülse 101 mit einem am vorderen Ende befindlichen Kopfbereich 102 aufweist. Am Kopfbereich 102 ist ein Bohrer 110 vorgesehen, der zu Behandlungszwecken durch einen Turbinenantrieb in Rotation versetzt wird. Hierzu ist im Kopfbereich 102 ein schematisch dargestellter Turbinenläufer 105 vorgesehen, der über eine sich durch die Griffhülse 101 erstreckende Druckluftleitung 103 angetrieben wird und mittels zweier Lager drehbar gelagert ist. Die Lager sind dabei insbesondere entsprechend der nachfolgend beschriebenen Erfindung ausgebildet.

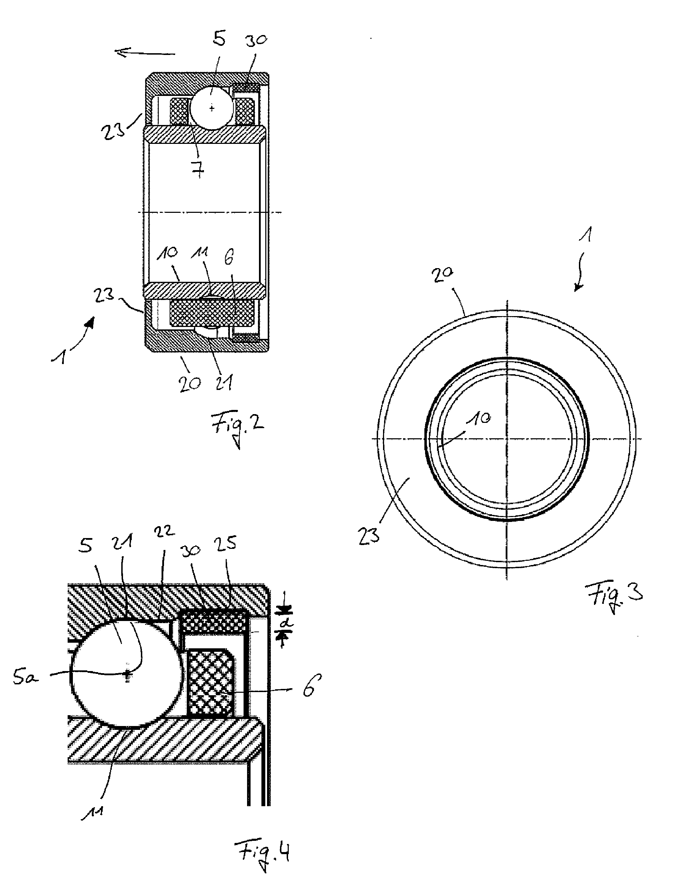

Das in Figur 2 im Schnitt dargestellte und allgemein mit dem Bezugszeichen 1 versehene Lager ist also beispielsweise zur Lagerung eines Turbinenläufers eines zahnärztlichen Turbinenhandstücks vorgesehen. Das Lager 1 weist in üblicher Weise zwei Lagerringe, einen inneren Lagerring 10 sowie einen äußeren Lagerring 20, auf. In dem ringartigen Zwischenraum zwischen beiden Lagerringen 10, 20 sind mehrere Wälzkörper, im vorliegenden Fall mehrere Kugeln 5 angeordnet, die entlang von Laufflächen an den beiden Lagerringen 10, 20 rollen können und hierdurch eine Rotation der beiden Lagerringe 10, 20 zueinander ermöglichen.

Die Kugeln 5 sind mit Hilfe eines Käfigs 6 gleichmäßig verteilt in dem Zwischenraum zwischen den beiden Lagerringen 10, 20 gehalten. Der Käfig 6 ist ebenfalls ringartig ausgeführt und weist jeweils entsprechende Ausnehmungen 7 zur Aufnahme jeweils einer Kugel 5 auf. Diese Ausnehmungen 7 sind über den gesamten Umfang des Käfigs 6 hinweg gleichmäßig verteilt, so dass sichergestellt, dass auch die Kugeln 5 gleichmäßig verteilt am Außenumfang des Innenrings 10 entlanglaufen können, wodurch die Laufruhe des Lagers 1 deutlich erhöht wird. Im vorliegenden Fall handelt es sich um einen sog. Massivkäfig, der zu einer nochmaligen Verbesserung des Lagers 1 im Hinblick auf seine Stabilität führt.

Um den Einbau der Kugeln 5 gemeinsam mit dem Massivkäfig 6 zu ermöglichen, ist das Lager 1 als sog. Angular-Kontaktlager ausgeführt. Im vorliegenden Fall bedeutet dies, dass beide Lagerringe 10, 20 etwa im mittleren Bereich kreissegmentartige Vertiefungen 11 bzw. 21 aufweisen, welche die einander gegenüberliegenden Laufflächen für die Kugeln 5 bilden. Während allerdings beim Lagerinnenring 10 die Vertiefung 11 zu beiden Seiten durch erhöhte Bereiche des Innenrings 10 begrenzt ist, ist bei dem äußeren Lagerring 20 die Vertiefung 21 zur rechten Seite hin offen. Hier ist die entsprechende Schulter abgeflacht bzw. abgeschliffen, so dass sich in dieser Axialrichtung gesehen der Abstand zwischen der Außenfläche des Innenlagerrings 10 und Innenfläche des Außenlagerrings 20 - abgesehen von einer kleinen Erhöhung 22, die unmittelbar die Lauffläche zur rechten Seite hin begrenzt - vergrößert. Dies hat zwar zur Folge, dass eine Montage des Lagers 1, also ein Ineinanderschieben der beiden Lagerringe 10, 20 mit den dazwischen angeordneten Kugeln 5 und dem Käfig 6 erleichtert bzw. erst ermöglicht wird, gleichzeitig allerdings die Gefahr besteht, dass bei einer höheren Belastung des äußeren Lagerrings in Pfeilrichtung (siehe Fig. 1), also nach links, dieser abgezogen werden kann. Das Lager 1 würde in diesem Fall auseinanderfallen und wäre unbrauchbar.

Um diese für Angular-Kontaktlager typische axiale Instabilität zu vermeiden, wird gemäß der vorliegenden Erfindung deshalb vorgeschlagen, im Bereich der abgeflachten Schulter, also im dargestellten Ausführungsbeispiel rechts von den Kugeln 5 ein Sicherungselement in Form eines Kunststoffrings 30 anzuordnen. Dieser Kunststoffring 30 ist im dargestellten Ausführungsbeispiel an der Innenfläche des Außenrings 20 im abgeschliffenen bzw. abgeflachten Bereich angeordnet. Er kann insbesondere mit dem Auslagerring 20 verrastet sein bzw. in diesen eingeschnappt werden, was dadurch ermöglicht wird, dass der Außenlagerring 20 eine entsprechende umlaufende Vertiefung 25 aufweist. Nach Zusammenfügen der beiden Lagerringe 10, 20 mit den Kugeln 5 und dem Käfig 6 wird von der Stirnseite her der leicht flexible Sicherungsring 30 eingeschoben und solange in Richtung der Kugeln 5 gedrückt, bis er in die umlaufende Ausnehmung 25 einschnappt. Es ergibt sich hierdurch die in Figur 2, insbesondere jedoch in Figur 4 in Vergrößerung dargestellte Konfiguration.

Erkennbar ist, dass der Sicherungsring 30 in Axialrichtung gesehen im Bereich des Käfigs 6 angeordnet ist, als zur rechten Seite hin allenfalls einen sehr geringen Überstand aufweist. Diese Anordnung hat zur Folge, dass der Sicherungsring 30 in Axialrichtung keinen zusätzlichen Platz beansprucht und dementsprechend nicht zu einer Verlängerung der Bauweise des Lagers führt.

Wie weiterhin in Figur 4 erkennbar ist, weist der Sicherungsring 30 über seinen Umfang hinweg einen gleichmäßigen Querschnitt mit einer Dicke d auf, die derart bemessen ist, dass er in Axialrichtung die Kugeln 5 hintergreift bzw. radial gesehen zur zentralen Achse des Lagers mit seiner Innenfläche 31 eine geringeren Abstand aufweist als der von der Zentralachse abgewandte Außenumfang 5a der Kugeln 5. Der Sicherungsring 30 würde also nun für den Fall, dass wiederum eine Belastung des Außenlagerrings 20 in Pfeilrichtung auftritt, mit den Kugeln 5 kollidieren, so dass der Außenlagerring 20 nicht weiter in dieser Richtung gedrückt werden kann. Gleichzeitig überlappt der Sicherungsring 30 in Axialrichtung nicht mit dem Käfig 6 bzw. er ist in Radialrichtung gesehen vollständig außerhalb des Käfigs 6 angeordnet, so dass im Falle der oben beschriebenen Belastung des Außenlagerrings 20 tatsächlich die Kugeln 5, nicht jedoch der Käfig 6 mit dem Sicherungsring 30 kollidieren. Beide Lagerringe 10, 20 sind also in beiden Axialrichtungen gesehen gegeneinander verriegelt und das eingangs beschriebene Problem der Gefahr, dass das Lager 1 verhältnismäßig leicht beschädigt werden kann, wird hierdurch vermieden. Dabei muss der Sicherungsring 30 nicht zwangsläufig einen gleichmäßigen Querschnitt aufweisen sonder könnte auch variable gestaltet werden, z.B. Nocken oder Unterbrechungen bzw. Ausnehmungen aufweisen. Auch die Verwendung eines ringsegmentartigen Sicherungselements wäre denkbar, sofern die oben beschriebene Sicherungsfunktion gewährleistet ist.

Ein zweites Sicherungs- bzw. Verriegelungselement ist ferner an dem dem Sicherungsring 30 gegenüberliegenden Ende des Außenlagerrings 20 ausgebildet. Hier ist der Endbereich 23 abgewinkelt ausgeführt und derart nach innen gezogen, dass hier nur noch ein minimaler Abstand zur Außenfläche des Innenlagerrings 10 vorliegt. Dieser nach innen gezogene Endbereich berührt also nicht den Innenlagerring 10, um ein Schleifen zu vermeiden. Gleichzeitig verhindert er allerdings ein Abziehen des Außenlagerrings 20 nach rechts hin, sodass letztendlich in axialer Richtung eine äußerst stabile Anordnung erhalten wird.

Ein weiterer Vorteil der beiden Sicherungselemente, also des Sicherungsrings 30 sowie des nach innen gezogenen Endbereichs 23 liegt darin, dass von den beiden Stirnseiten des Lagers 10 her gesehen nur geringe Freiräume bzw. Spalte verbleiben, so dass ohne weitere Abdichtungsmaßnahmen optimierte Schmiereigenschaften des Lagers 1 erhalten werden. Einerseits wird das Eindringen von Schmutz verhindert, andererseits besteht auch nicht die Gefahr, dass Schmiermittel nach außen gelangt, so dass das Lager 1 insgesamt sehr wartungsarm ist.

Insgesamt gesehen wird also ein Lager geschaffen, welches sich durch äußerst gute Laufeigenschaften auszeichnet, gleichzeitig allerdings auch eine ausreichende Stabilität insbesondere in Axialrichtung besitzt, die ein einfaches Montieren und Demontieren des Lagers ermöglicht. Darüber hinaus führen die Sicherungsmaßnahmen aufgrund der Tatsache, dass der Sicherungsring in Axialrichtung nicht mit dem Käfig überlappt, nicht zu einer axialen Verlängerung der gesamten Anordnung, sodass nach wie vor äußerst kompakte Lager realisiert werden können. Diese können dabei nicht nur zur drehbaren Lagerung von Elementen, die Bestandteil zahnärztlicher Handstücke oder Handinstrumente sind, genutzt werden, sondern sind vielfältig in den verschiedensten Anwendungsgebieten einsetzbar.

## Patentansprüche

1. Lager (1) zum drehbaren Lagern eines Drehteils, beispielsweise eines Turbinenläufers eines zahnärztlichen Handstücks, wobei das Lager (1) aufweist:
● mehrere Wälzkörper (5), insbesondere Kugeln, die zwischen einem inneren Lagerring (10) und einem äußeren Lagerring (20) angeordnet sind,
● einen die Wälzkörper (5) in Axialrichtung umgebenden Käfig (6) sowie
● ein Verriegelungselement zur axialen Verriegelung der Lagerringe (10, 20) gegeneinander,
wobei das Verriegelungselement ein ringartiges oder ringsegmentartiges Sicherungselement (30) aufweist, welches am Innenumfang des äußeren Lagerrings (20) oder am Außenumfang des inneren Lagerings (10) im Bereich des Käfigs (6) angebracht ist, derart, dass es die Wälzkörper (5) in Axialrichtung blockiert.

2. Lager nach Anspruch 1,
**dadurch gekennzeichnet,**
**dass** das Sicherungselement (30) form- und/oder kraftschlüssig an dem entsprechenden Lagerring (10, 20) befestigt ist.

3. Lager nach Anspruch 1 oder 2,
**dadurch gekennzeichnet,**
**dass** das Sicherungselement (30) durch einen mit dem entsprechenden Lagerring (10, 20) verrastbares elastisches Element, insbesondere ein Kunststoffelement gebildet ist.

4. Lager nach einem der Ansprüche 1 bis 3,
**dadurch gekennzeichnet,**
**dass** das Sicherungselement (30) über seien Umfang hinweg einen im Wesentlichen identischen Querschnitt aufweist.

5. Lager nach einem der vorherigen Ansprüche,
**dadurch gekennzeichnet,**
**dass** das Sicherungselement (30) in Axialrichtung des Lagers nicht mit dem Käfig (6) überlappt.

6. Lager nach einem der vorherigen Ansprüche,
**dadurch gekennzeichnet,**
**dass** die Lagerringe (10, 20) jeweils eine Vertiefung (11, 21) aufweisen, welche eine Lauffläche für die Wälzkörper bildet (5), wobei bei zumindest einem der beiden Lagerringe (10, 20) eine neben der Vertiefung (11, 21) befindliche Schulterfläche abgeflacht bzw. abgeschliffen ist.

7. Lager nach Anspruch 6,
**dadurch gekennzeichnet,**
**dass** das Sicherungselement (30) im Bereich der abgeflachten bzw. abgeschliffenen Schulter des entsprechenden Lagerrings (10, 20) angeordnet ist.

8. Lager nach einem der vorherigen Ansprüche,
**dadurch gekennzeichnet,**
**dass** an der dem ersten Sicherungselement (30) gegenüberliegenden Seite ein zweites Sicherungselement (23) angeordnet ist, welches einstückig mit einem der Lagerringe (10, 20) verbunden ist.

9. Lager nach Anspruch 8,
**dadurch gekennzeichnet,**
**dass** es sich bei dem zweiten Sicherungselement um einen abgewinkelten, sich von dem entsprechenden Lagerring (10, 20) in Richtung des anderen Lagerrings (10, 20) erstreckenden Endbereich (23) handelt.

10. Lager nach Anspruch 8 oder 9,
**dadurch gekennzeichnet,**
**dass** sowohl das erste Sicherungselement (30) als auch das zweite Sicherungselement (23) am äußeren Lagerring (20) angeordnet sind.

11. Lager nach einem der vorherigen Ansprüche,
**dadurch gekennzeichnet,**
**dass** es sich bei dem Käfig (6) um einen Voll- bzw. Massivkäfig handelt.

12. Zahnärztliches oder zahnmedizinisches Handstück (100) mit einem drehbar gelagerten Element,
**dadurch gekennzeichnet,**
**dass** das Handstück (100) zur drehbaren Lagerung des Elements ein oder mehrere Lager (1) nach einem der vorherigen Ansprüche aufweist.

13. Handstück nach Anspruch 12,
**dadurch gekennzeichnet,**
**dass** es sich um ein zahnärztliches Turbinenhandstück handelt und das drehbar gelagerte Element durch einen Turbinenläufer (105) gebildet ist.
